# EUROPÄISCHE PATENTSCHRIFT

(11) **EP 1 536 595 B1**
(45) Veröffentlichungstag und Bekanntmachung des Hinweises auf die Patenterteilung: **18.10.2006**
(21) Anmeldenummer: 03027509.3
(22) Anmeldetag: 28.11.2003
(51) Int. Cl.: H04L 12/413, B60R 16/02, G06F 13/40, H04L 12/24

(54) **Verfahren zum Einbinden eines Treibermoduls in eine Kraftfahrzeugelektrik**
Method for embedding a driver module in vehicle electronics
Procédé pour implanter un module de gestion dans l'électronique automobile

(43) Veröffentlichungstag der Anmeldung: 01.06.2005
(73) Patentinhaber: Delphi Technologies, Inc., Troy, MI 48007 (US)
(72) Erfinder: Giesen, Marko, 51588 Nümbrecht (DE); Trommer, Frank O., 51588 Nümbrecht (DE); Lehmann, Klaus, 53797 Lohmar (DE); Stadler, Peter, 57482 Wenden (DE); Schulte, Thomas, 58540 Meinerzhagen Windebruch (DE); Heinrich, Markus, 51588 Nümbrecht (DE)
(74) Vertreter: Manitz, Finsterwald & Partner GbR

(56) Entgegenhaltungen:
- EP-A- 0 791 506
- DE-A- 10 203 341
- US-B1- 6 249 060

## Beschreibung

Die vorliegende Erfindung betrifft ein Verfahren zum Einbinden eines Treibermoduls in eine Kraftfahrzeugelektrik.

Elektrische Systeme von Kraftfahrzeugen, im folgenden kurz als Kraftfahrzeugelektriken bezeichnet, verfügen häufig über eine zentrale Steuereinheit, die Treibermodule der Kraftfahrzeugelektrik ansteuert, die wiederum an diese angeschlossene elektrische Einrichtungen, beispielsweise Verbraucher bzw. Lasten oder Sensoren, betreiben. Dabei sind die Treibermodule für die entsprechenden elektrischen Einrichtungen fest vorgegeben und werden mit diesen über Kabel verbunden, die eine Codierung über Farben oder verwendete Steckverbinder aufweisen, die einen falschen Anschluss der elektrischen Einrichtungen an die Treibermodule verhindern soll. Die Treibermodule sind dabei ihrer Funktion bzw. den an ihnen angeschlossenen Einrichtungen entsprechend konstruiert, so dass in eine Kraftfahrzeugelektrik verschiedene Treibermodule eingebaut werden. Dementsprechend sind auch die Treibermodule nicht beliebig mit der zentralen Steuereinheit verbindbar, so dass auch für die Verbindung zu der Kraftfahrzeugelektrik Codierungen notwendig sein können.

Dies hat zur Folge, dass zum Aufbau einer Kraftfahrzeugelektrik eine große Anzahl verschiedener Komponenten notwendig ist, was die Kosten für solche Systeme wesentlich erhöhen kann. Darüber hinaus müssen für Reparaturen große Anzahlen von Ersatzteilen bereitgehalten werden.

In US 6 249 060 B1 ist ein Multiplexsystem für ein Fahrzeug zur Steuerung von elektrisch betriebenen Komponenten beschrieben. Das System verfügt über einen integrierten Strom- und Kommunikationsbus, um Strom und Befehle an Fahrzeugkomponenten zu liefern, Multiplexeinrichtungen, um mehrfache Befehle über zwei oder mehr Busse zu senden, eine Steuerprozessorschaltung zur Steuerung des Betriebs, einen Kabelbaum mit Schnittstellenverbindungen für elektrisch betriebene Komponenten, und wählbare Kommunikationsbandbreiten zur Anpassung der Komponenten und Bandbreiten aneinander.

In DE 102 03 341-A1 ist ein elektronisches Steuergerät für ein Kraftfahrzeug oder ein Fahrzeug-Antriebsaggregat beschrieben, das über mit Steckern versehene Kabel mit mehreren elektrischen oder elektronischen Bauelementen verbunden ist und bei dem nach einem erstmaligen Verbinden eines Steckers mit einem konkreten Bauelement eine Lernfunktion abläuft. Anhand der Lernfunktion wird im Steuergerät erkannt und abgelegt, welcher konkrete Typ von verschiedenen möglichen Bauelementen am jeweiligen Stecker angeschlossen ist. Im Rahmen der Lernfunktion wird das jeweilige Bauelement aktiviert und anhand der Signale eines diese Aktivität registrierenden Sensors auf den konkreten Typ dieses Bauelements geschlossen.

In EP 791 506 A2 ist ein elektrisches System beschrieben, das eine zentrale Steuerung besitzt, die über Multiplexverbindungen mit intelligenten Knoten verbunden sind. Die Knoten sind mit vorgegebenen Instruktionssätzen programmiert, die dazu notwendig sind, an die Knoten angeschlossene Lasten zu betreiben. Die zentrale Steuerung kann Befehle auf einer hohen Ebene über einen seriellen Datenkommunikationsbus an die intelligenten Knoten ausgeben, um die Abarbeitung der vorgegebenen programmierten Instruktionssätze in den intelligenten Knoten auszulösen. Die Knoten wiederum betreiben die elektrischen Lasten des Systems.

Der vorliegenden Erfindung liegt daher die Aufgabe zugrunde, ein Verfahren zur Einbindung von Treibermodulen in eine Kraftfahrzeugelektrik bereitzustellen, das einen einfachen Aufbau einer Kraftfahrzeugelektrik und eine einfache Montage derselben erlaubt.

Die Aufgabe wird gelöst durch ein Verfahren mit den Merkmalen des Anspruchs 1.

Bei dem erfindungsgemäßen Verfahren zum Einbinden wenigstens eines Treibermoduls in eine Kraftfahrzeugelektrik, die wenigstens das Treibermodul, an Aus- und/oder Eingänge des Treibermoduls angeschlossene elektrische Einrichtungen vorgegebener möglicher Typen sowie eine mit dem Treibermodul über Signalkanäle verbundene Steuereinheit umfasst, wobei die Steuereinheit zum Betrieb der elektrischen Einrichtungen über diesen zugeordnete Signalkanäle Signale zu und/oder von dem Treibermodul übermittelt bzw. empfängt, wird ein Anschlussmuster des Treibermoduls ermittelt, das wenigstens durch die Typen der an das Treibermodul angeschlossenen elektrischen Einrichtungen und deren jeweilige Anzahl gegeben ist, und das ermittelte Anschlussmuster mit vorgegebenen Anschlussmustern für in der Kraftfahrzeugelektrik möglicherweise vorkommende Treibermodule mit daran angeschlossenen elektrischen Einrichtungen verglichen, denen jeweils wenigstens ein Parameter zum Betrieb des Treibermoduls und/oder der daran angeschlossenen elektrischen Einrichtungen zugeordnet ist. Auf der Basis des Vergleichs wird dem Treibermodul wenigstens ein Parameter zugewiesen und/oder es werden Signalkanäle und an das Treibermodul angeschlossene elektrische Einrichtungen einander zugeordnet.

Das erfindungsgemäße Verfahren kommt also für Kraftfahrzeugelektriken zum Einsatz, die eine Steuereinheit, wenigstens ein über Signalkanäle mit der Steuereinheit verbundenes Treibermodul und an Aus- und/oder Eingänge des Treibermoduls angeschlossene elektrische Einrichtungen umfasst. Vorzugsweise sind mehrere entsprechende Treibermodule mit daran angeschlossenen elektrischen Einrichtungen an die Steuereinheit angeschlossen.

Die elektrischen Einrichtungen können grundsätzlich beliebig sein, wobei jedoch für eine gegebene Kraftfahrzeugelektrik bestimmte Typen vorgegeben sind, so dass Anschlussmuster ermittelbar sind. Bei den Typen braucht es sich nicht unbedingt um Produkte verschiedener Hersteller zu handeln. Von Bedeutung können vielmehr die Art der elektrischen Einrichtung und deren mögliche Funktion in der Kraftfahrzeugelektrik sowie bei deren Betrieb zu beachtende Bedingungen sein. Die Typen können insbesondere so gewählt sein, dass bei Kenntnis des Typs Betriebsparameter für die elektrischen Einrichtungen ermittelbar und ggf. setzbar sind. Darüber hinaus sind die Typen vorzugsweise so gewählt, dass sie bei einer automatischen Konfiguration des Treibermoduls automatisch ermittelbar sind. Insbesondere kann daher die Typeneinteilung nach elektrischen Eigenschaften der elektrischen Einrichtungen erfolgen.

Als elektrische Einrichtungen kommen beispielsweise elektrische Lasten bzw. Verbraucher wie Lampen oder Motoren oder auch Sensoren in Betracht.

Das Treibermodul kann insbesondere mehrere Treiber aufweisen, unter denen jegliche Einrichtungen verstanden werden, die zum Betrieb der elektrischen Einrichtungen in einer Kraftfahrzeugelektrik geeignet sind. Insbesondere können die Treiber Lastschalter aufweisen, mit denen an diese angeschlossene Verbraucher bzw. Lasten auf entsprechende Steuersignale hin an- oder abschaltbar sind. Darüber hinaus können auch Treiber für Sensoren verwendet werden.

Die Signalkanäle zwischen der Steuereinheit und dem Treibermodul können in Form getrennter Leitungen oder vorzugsweise als Kanäle in einem Bussystem gegeben sein.

Beim normalen Betrieb gibt die Steuereinheit über einen einer elektrischen Einrichtung zugeordneten Signalkanal an das entsprechende Treibermodul ein Steuersignal ab, das dort dem entsprechenden Treiber zugeführt wird, der dann entsprechend die elektrische Einrichtung ansteuert. Über die Signalkanäle können jedoch auch Signale von den Treibermodulen, die dort beispielsweise von den an dieses angeschlossenen elektrischen Einrichtungen erfasst worden sein können, an die Steuereinheit übertragen werden.

Bei dem erfindungsgemäßen Verfahren wird zunächst ein Anschlussmuster des Treibermoduls ermittelt, das wenigstens durch die Typen der an das Treibermodul angeschlossenen elektrischen Einrichtungen und deren jeweilige Anzahl gegeben ist. Diesem Schritt liegt die Annahme zugrunde, dass Treibermodule in einer solchen Kraftfahrzeugelektrik durch die an sie angeschlossenen elektrischen Einrichtungen bzw. deren Typen und genauer das Anschlussmuster identifizierbar sind.

Das ermittelte Anschlussmuster wird dann mit vorgegebenen Anschlussmustern für Treibermodule in der Kraftfahrzeugelektrik verglichen. Die vorgegebenen Anschlussmuster ergeben sich dabei aus den bei korrektem Aufbau der Kraftfahrzeugelektrik möglichen Anschlussmustern von elektrischen Einrichtungen an den entsprechenden, in der Kraftfahrzeugelektrik enthaltenen Treibermodulen. Solche vorgegebenen Anschlussmuster können insbesondere in der Steuereinheit gespeichert sein, wobei in dem entsprechenden Speicher auch Anschlussmuster für andere Kraftfahrzeugelektriken gespeichert sein können, in denen die Steuereinheit eingesetzt wird.

Jedem dieser vorgegebenen Anschlussmuster ist wenigstens ein Parameter zum Betrieb des dem Anschlussmuster entsprechenden Treibermoduls und/oder der daran angeschlossenen elektrischen Einrichtungen zugeordnet.

Durch den Vergleich der Anschlussmuster wird das Treibermodul identifiziert, so dass wenigstens ein entsprechend bestimmter Parameter für das Treibermodul dem Treibermodul zugewiesen werden kann.

Alternativ oder zusätzlich kann automatisch eine Zuordnung von Signalkanälen und Treibermodulen bzw. an diese angeschlossenen elektrischen Einrichtungen erfolgen, so dass die Verwendung von codierten Kabeln oder Kabelbäumen zur Verbindung der zentralen Steuereinheit und der Treibermodule nicht notwendig ist.

Auf diese Weise kann ein Treibermodul der Kraftfahrzeugelektrik zusammen mit den daran angeschlossenen elektrischen Einrichtungen automatisch erkannt und für den Betrieb in der Kraftfahrzeugelektrik gemäß den an dieses angeschlossenen elektrischen Einrichtungen einfach und ohne erheblichen Aufwand eingerichtet bzw. konfiguriert werden.

Weiterbildungen und bevorzugte Ausführungsformen der Erfindung sind in den Ansprüchen, der Beschreibung und den Zeichnungen beschrieben.

Grundsätzlich genügt es, dass die Anschlussmuster nur die verschiedenen Typen der an das Treibermodul angeschlossenen elektrischen Einrichtungen und deren jeweilige Anzahl umfassen. Um eine eindeutige Identifikation der Treibermodule auch dann zu ermöglichen, wenn Verbraucher des gleichen Typs, aber unterschiedlicher Funktion, beispielsweise Glühlampen für Blinker rechts und links, an ein und demselben Treibermodul angeschlossen sind, ist es jedoch bevorzugt, dass das Anschlussmuster zusätzlich Angaben darüber enthält, welcher ermittelte Typ von elektrischer Einrichtung an welchem Aus- und/oder Eingang des Treibermoduls angeschlossen ist. Insbesondere kann das Anschlussmuster beispielsweise die ermittelten Typen in der Reihenfolge der Aus- und/oder Eingänge des Treibermoduls enthalten, an denen sie angeschlossen sind. Geht man davon aus, dass bei einer solchen Kraftfahrzeugelektrik sichergestellt ist, dass eine gegebene elektrische Einrichtung mit einer gegebenen Funktion immer an den gleichen Aus- bzw. Eingang eines entsprechenden Treibermoduls angeschlossenen ist, kann so eine eindeutige Zuordnung von Parametern zu elektrischen Einrichtungen gleichen Typs an dem gleichen Treibermodul erreicht werden.

Grundsätzlich ist es denkbar, dass das Treibermodul nicht nur die Typen der an dieses angeschlossenen elektrischen Einrichtungen ermittelt, sondern diesen auch Signalkanäle beispielsweise in einem Bus zuordnet. Die Steuereinheit kann dann diese Zuordnung übernehmen. Es ist jedoch bevorzugt, dass auf der Basis der Parameter, die dem durch den Vergleich ermittelten Anschlussmuster zugeordnet sind, vorgegebene Signalkanäle den elektrischen Einrichtungen zugeordnet werden. Die einem vorgegebenen Anschlussmuster zugeordneten Parameter können insbesondere Kennungen der Signalkanäle umfassen, die für vorgegebene Funktionen und die für diese notwendigen elektrischen Einrichtungen vorgegeben sind. Diese Zuordnung kann insbesondere in dem Treibermodul erfolgen.

Um die Anzahl der zum Aufbau der Kraftfahrzeugelektrik notwendigen verschiedenen Komponenten möglichst weitgehend reduzieren zu können, ist es bevorzugt, dass mehrere gleiche, mit der Steuereinheit verbundene Treibermodule zum Betrieb wenigstens einiger der elektrischen Einrichtungen konfigurierbar sind und entsprechend den an sie angeschlossenen elektrischen Einrichtungen automatisch konfiguriert werden. Die Konfiguration kann ganz oder teilweise in den Treibermodulen erfolgen, die entsprechenden Parameter werden jedoch vorzugsweise wenigstens teilweise von der Steuereinheit gesetzt bzw. an die Treibermodule übertragen.

Grundsätzlich genügt es, dass das Anschlussmuster des Treibermoduls beispielsweise in dem Treibermodul gespeichert und von der Steuereinheit zur Ermittlung des Anschlussmusters abrufbar ist. Um Treibermodule verwenden zu können, die für die gesamte Kraftfahrzeugelektrik gleich sind, ist es jedoch bevorzugt, dass zur Ermittlung des Anschlussmusters die Typen der an das Treibermodul angeschlossenen elektrischen Einrichtungen ermittelt werden, indem an die Ein- bzw. Ausgänge vorgegebene elektrische Testsignale angelegt werden, Antwortsignale erfasst werden, die die Antworten der elektrischen Einrichtungen auf die jeweiligen Testsignale wiedergeben, und zur Ermittlung von vorgegebenen Typen der angeschlossenen elektrischen Einrichtungen aus den Antwortsignalen ermittelte Daten mit entsprechenden vorgegebenen Referenzdaten für mögliche vorgegebene Typen von elektrischen Einrichtungen, für die das Treibermodul vorgesehen ist, verglichen werden.

Die Referenzdaten können dabei durch Spezifikationen vorgegeben oder durch Versuche mit den verwendeten Testsignalen bestimmt worden sein. Vorzugsweise sind sie so gewählt, dass eine möglichst gute Differenzierung zwischen Typen möglich ist. Die Testsignale können dabei von einem Testsignalgenerator in dem Treibermodul oder von Treibern in dem Treibermodul abgegeben werden. Die Abgabe kann für die angeschlossenen Einrichtungen parallel oder zeitlich gestaffelt erfolgen.

Dabei ist es besonders bevorzugt, dass als Antwortsignal jeweils ein Stromsignal und/oder ein Spannungssignal verwendet wird, das den Strom zu bzw. die Spannung an der jeweiligen elektrischen Einrichtung wiedergibt. Auf diese Weise brauchen die elektrischen Einrichtungen nicht über zusätzliche Komponenten zu verfügen, die allein zur Identifizierung derselben dienen. Vielmehr können allein deren elektrische Eigenschaften in Bezug auf die ohnehin vorhandenen Ein- und Ausgänge verwendet werden.

Hierzu ist es besonders bevorzugt, dass wenigstens ein Treiber des Treibermoduls als Lastschalter ein MOSFET-Bauelement mit Strommessung aufweist, das ein dem Laststrom entsprechendes Stromsignal abgibt, und dass als Antwortsignal ein durch das Stromsignal an einem Widerstandselement erzeugtes Spannungssignal verwendet wird. Solche MOSFET-Bauelemente mit Strommessung bzw. Stromerfassung ("current sense - Funktion) erlauben eine besonders einfache Bildung der Antwortsignale, die die Antworten der elektrischen Einrichtungen in Form der Lastströme wiedergeben, ohne erheblichen zusätzlichen Schaltungsaufwand.

Nimmt das Testsignal für große Zeiten nach einer Änderung im Wesentlichen konstante Werte an, so braucht von dem Antwortsignal beispielsweise nur dessen Amplitude im eingeschwungenen Zustand verwendet zu werden. Es ist jedoch bevorzugt, dass ein zeitlicher Verlauf wenigstens eines Antwortsignals nach einem durch das jeweilige Testsignal vorgegebenen Anfangszeitpunkt erfasst wird, und dass auf der Basis wenigstens des zeitlichen Verlaufs der Typ der jeweiligen elektrischen Einrichtung ermittelt wird. Hierbei wird ausgenutzt, dass sich die Antworten unterschiedlicher elektrischer Einrichtungen in Abhängigkeit von deren elektrischen Eigenschaften insbesondere deren Widerstand, Kapazität und Induktivität qualitativ und auch quantitativ unterscheiden, so dass durch die Auswertung von zeitlichen Verläufen eine viel feinere Differenzierung zwischen verschiedenen elektrischen Einrichtungen ermöglicht wird, wodurch eine wesentlich größere Anzahl von durch diese zeitlichen Verläufe definierten Typen von elektrischen Einrichtungen unterschieden werden kann.

Dabei ist es weiterhin besonders bevorzugt, dass als Testsignale Sprungsignale verwendet werden. Die Antworten auf solche Sprungsignale hängen für die meisten elektrischen Einrichtungen von allen elektrischen Parametern derselben ab und gestatten daher auf einfache Weise eine Unterscheidung zwischen verschiedenen Typen.

Insbesondere ist es dabei bevorzugt, dass das Testsignal durch Ein- oder Ausschalten einer entsprechenden elektrischen Einrichtung erzeugt wird. Auf diese Weise kann das Sprungsignal allein durch einen ohnehin von dem Treibermodul durchführbaren Prozess erhalten werden, so dass für die Erzeugung der Testsignale im Wesentlichen keine zusätzlichen Einrichtungen benötigt werden.

Die Erfindung wird nun weiter beispielhaft anhand der Zeichnungen erläutert. Es zeigen:
- Fig. 1: eine schematische Darstellung einer Kraftfahrzeugelektrik mit einer zentralen Steuereinheit, mehreren Treibermodulen, daran angeschlossenen elektrischen Einrichtungen und einer Spannungsquelle,
- Fig. 2: eine schematische Darstellung eines Aufbaus der Treibermodule in Fig. 1,
- Fig. 3: eine schematische Darstellung eines Verlaufs eines Laststroms I als Funktion der Zeit t für eine im Wesentlichen kapazitive Last bei einem sprunghaften Einschalten der Last,
- Fig. 4: eine schematische Darstellung eines Verlaufs eines Laststroms I als Funktion der Zeit t für eine ohmsche Last bei einem sprunghaften Einschalten der Last,
- Fig. 5: eine schematische Darstellung eines Verlaufs eines Laststroms I als Funktion der Zeit t für eine induktive Last bei einem sprunghaften Ein- und Ausschalten der Last, und
- Fig. 6: eine schematische Darstellung eines Verlaufs eines Laststroms I als Funktion der Zeit t für eine gegebene Last zur Erläuterung der Erfassung des Verlaufs dieser Kennlinie.

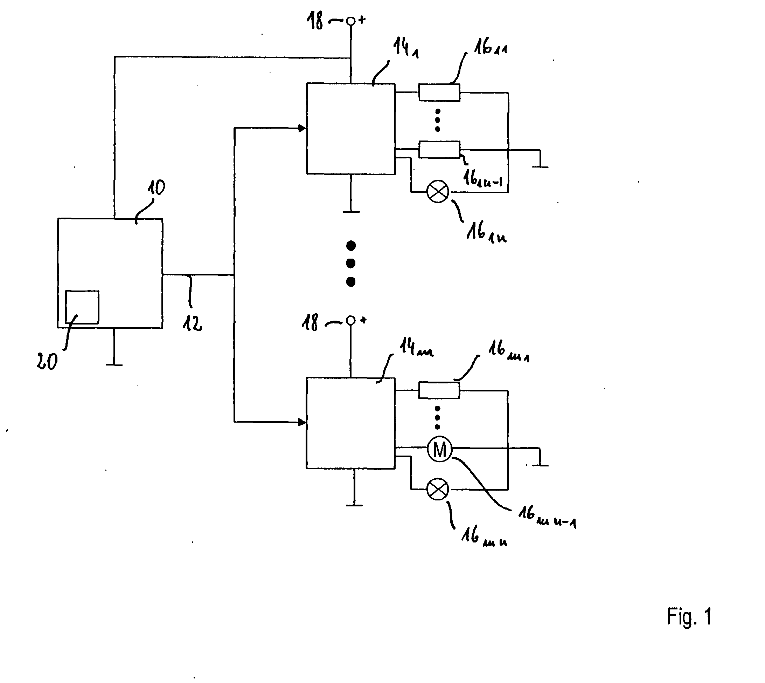

In Fig. 1 umfasst eine Kraftfahrzeugelektrik eine zentrale Steuereinheit 10, die über einen Bus 12 mit Treibermodulen 14₁ bis 14ₘ an die Verbraucher bzw. Lasten16₁₁ bis 16₁ₙ bis 16ₘ₁ bis 16ₘₙ angeschlossen sind. m und n sind dabei natürliche Zahlen vorzugsweise größer als 1. Dabei wurde nur zur einfacheren Beschreibung angenommen, dass an alle Treibermodule jeweils die gleiche Zahl n von Lasten angeschlossen sind.

Die zentrale Steuereinheit 10 und die Treibermodule 14₁ bis 14ₘ werden über eine gemeinsame Spannungsquelle 18, im Beispiel eine Kraftfahrzeugbatterie, versorgt, deren Minuspol auf Masse liegt.

Die zentrale Steuereinheit 10 dient zum Betrieb der an die Treibermodule 14₁ bis 14ₘ angeschlossenen elektrischen Einrichtungen durch Ansteuerung der Treibermodule 14₁ bis 14ₘ in Abhängigkeit von der Betätigung von in den Figuren nicht gezeigten, an die zentrale Steuereinheit angeschlossenen Schaltern. Die zentrale Steuereinheit 10 verfügt dazu über einen entsprechenden Mikrocontroller und nichtflüchtige sowie wiederbeschreibbare Speicher. Darüber hinaus dient die zentrale Steuereinheit zur Einbindung der Treibermodule 14₁ bis 14ₘ in die Kraftfahrzeugelektrik, wozu sie neben einer entsprechenden Programmierung des Mikroprozessors zur Durchführung des im Folgenden geschilderten Verfahrens über einen Speicher 20 verfügt.

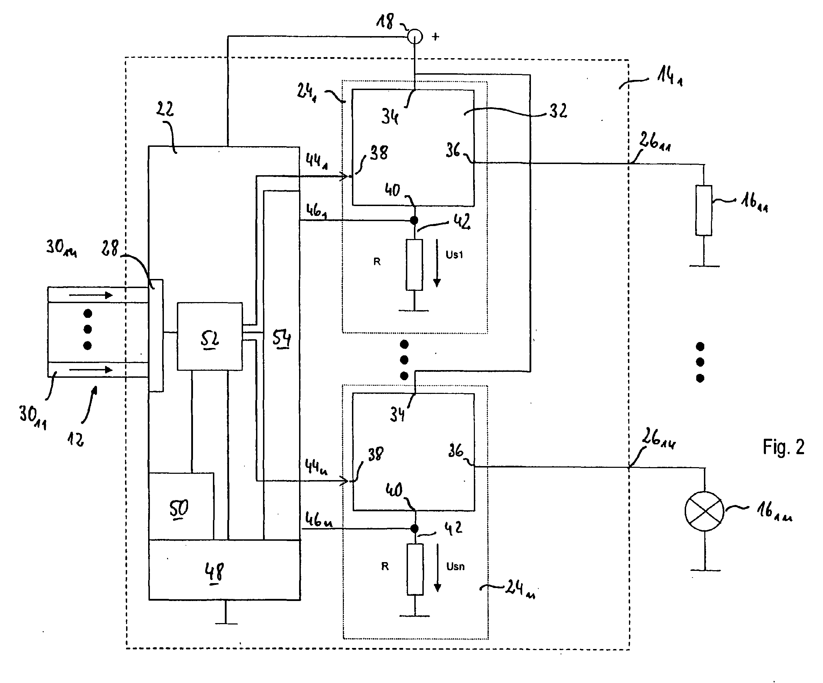

Die Treibermodule 14₁ bis 14ₘ sind gleich ausgebildet, so dass deren Aufbau und Funktion am Beispiel des Treibermoduls 14₁ beschrieben werden kann, das genauer in Fig. 2 gezeigt ist.

Das Treibermodul 14₁ verfügt über eine Steuer- und Auswerteeinrichtung 22 sowie n gleich ausgebildete, konfigurierbare Treiberschaltungen 24₁ bis 24ₙ, die über Ausgänge 26₁₁ bis 26₁ₙ, an die voneinander verschiedene, von dem Treibermodul 14₁ zu betreibende elektrische Einrichtungen, d.h. hier Verbraucher bzw. Lasten 16₁₁ bis 16₁ₙ, angeschlossen sind.

Weiterhin ist es über eine Busschnittstelle 28 der Steuer- und Auswerteeinrichtung 22, beispielsweise für einen CAN-Bus, mit Signalkanälen 30₁₁ bis 30₁ₙ des Bus 12 verbunden, über die Steuersignale zum Ein- bzw. Ausschalten der Lasten 16₁₁ bis 16₁ₙ an das Treibermodul 14₁ abgebbar sind. Die Treiberschaltungen 24₁ bis 24ₙ sind jeweils gleich ausgebildet, so dass deren Aufbau am Beispiel der Treiberschaltung 24₁ erläutert wird.

Die Treiberschaltung 24₁ umfasst als Lastschalter ein n-Kanal-MOSFET-Bauelement 32 in einer sogenannten "High-Side"-Anordnung, bei der dessen Drain-Anschluss 34 mit dem Pluspol der Spannungsquelle 18 und dessen Source-Anschluss 36 mit dem Ausgang 26₁₁ und damit der Last 16₁₁ verbunden ist. Der jeweils andere Anschluss der Last 16₁₁ liegt auf Masse, mit der auch der Minuspol der Spannungsquelle 18 verbunden ist.

Zur Zuführung von Schaltsignalen ist der Gate-Anschluss 38 des MOSFET-Bauelements 32 mit einem entsprechenden Schaltsignalausgang der Steuer- und Auswerteeinrichtung 22 verbunden.

Das MOSFET-Bauelement 32 verfügt weiterhin über eine Strommessfunktion ("Current-Sense"-Funktion). Über einen Stromsignalausgang 40 wird an einen Stromsignalzweig 42 mit einem darin angeordneten, mit Masse verbundenen Widerstand R ein Stromsignal abgegeben, dessen Stromstärke der Stärke des durch das MOSFET-Bauelement 24 zwischen dem Drain- und dem Source-Anschluss 34 bzw. 36 geleiteten Laststroms entspricht.

Durch Zuführung entsprechender Schaltsignale über Schaltsignalausgänge 44₁ bis 44ₙ der Steuer- und Auswerteschaltung 22 können so mittels der als Lastschalter fungierenden MOSFET-Bauelemente 32 der Treiberschaltungen 24₁ bis 24ₙ die jeweils an dieser angeschlossenen Lasten 16₁₁ bis 16₁ₙ ein- und ausgeschaltet werden.

Über dem Widerstand R jeweils abfallende, zu dem Stromsignal proportionale Spannungen Us1 bis Usn werden von den Treiberschaltungen jeweils Analogeingängen 46₁ bis 46ₙ der Steuer- und Auswerteeinrichtung 22 zugeführt.

Die Steuer- und Auswerteeinrichtung 22 verfügt, in Fig. 2 nur grob schematisch durch entsprechende Blöcke angedeutet, über eine erste Speichereinrichtung 48 in Form eines EEPROM, eine zweite Speichereinrichtung 50 mit einem nichtflüchtigen Speicher, eine Konfigurationseinrichtung 52 und eine Erfassungseinrichtung 54.

Die Erfassungseinrichtung 54 verfügt über einen oder mehrere in den Figuren nicht gezeigte Analog-Digital-Wandler, deren Eingänge mit den Analogeingängen 46₁ bis 46ₙ verbunden sind, um an diesen anliegende Spannungssignale in Digitalwerte umzusetzen.

Mittels der Steuer- und Auswerteeinrichtung 22 sind die Treiberschaltungen 24₁ bis 24ₙ konfigurierbar, wobei den Signalkanälen 30₁₁ bis 30₁ₙ entsprechend der Konfiguration Schaltsignalausgänge 44₁ bis 44ₙ und damit Treiberschaltungen 24₁ bis 24ₙ, Ausgänge 26₁ bis 26ₙ bzw. Lasten 16₁₁ bis 16₁ₙ zuordenbar sind. Durch die Schaltsignale und die Signale an den Analogeingängen 46₁ bis 46ₙ kann beispielsweise festgelegt oder überprüft werden, wie groß der maximal erlaubte Laststrom ist bzw. ob dieser überschritten wurde, so dass die Steuer- und Auswerteeinrichtung 22 insofern als konfigurierbarer Teil eines Treibers mit der jeweils angesteuerten Treiberschaltung ist.

Die Steuer- und Auswerteeinrichtung 22 ist so ausgebildet, dass nach erstmaligem Inbetriebnehmen des Treibermoduls 14₁, d.h. Verbindung mit der Spannungsquelle 18, dieses selbsttätig automatisch in Abhängigkeit von den an dieses angeschlossenen Lasten 16₁₁ bis 16₁ₙ die Typen der Lasten ermittelt.

Die Erkennung des Anschlussmusters des Treibermoduls 14₁ erfolgt nach dem im folgenden geschilderten Verfahren, das einen Teil eines Verfahrens zur Einbindung eines Treibermoduls in eine Kraftfahrzeugelektrik nach einer bevorzugten Ausführungsform der Erfindung bildet.

Bei einer ersten Verbindung des Treibermoduls 14₁ mit der Versorgungsspannungsquelle 18 gibt die Konfigurationseinrichtung 52 parallel oder nacheinander Schaltsignale über die Schaltsignalausgänge 44₁ bis 44ₙ an die Treiberschaltungen 24₁ bis 24ₙ, insbesondere deren Gate-Anschlüsse 38 ab, mittels derer die Kanäle zwischen den Drain-Anschlüssen 34 und den Source-Anschlüssen 36 aus einem nichtleitenden in einen leitenden Zustand versetzt werden.

Die Schaltsignale sind dabei so gewählt, dass die an den Lasten 16₁₁ bis 16₁ₙ anliegenden Spannungen in Form einer Sprungfunktion von 0 auf einen vorgegebenen Spannungswert springen.

Infolge dieses Sprungs fließt durch das entsprechende MOSFET-Bauelement 32 jeweils ein Laststrom, dessen zeitlicher Verlauf durch die elektrischen Eigenschaften der jeweils mit der entsprechenden Treiberschaltung 24₁ bis 24ₙ verbundenen elektrischen Lasten 16₁₁ bis 16₁ₙ gegeben ist. Die Lastströme sind daher als Antworten im Sinne der Erfindung auf Testsignale zu verstehen, die durch das Einschalten der Lasten 16₁ bis 16ₙ gegeben werden.

Entsprechend den zeitlichen Verläufen der jeweiligen Lastströme werden über die entsprechenden Stromsignalzweige 42 Stromsignale mit jeweils den Lastströmen entsprechenden Strömen abgegeben, die an den Analogeingängen 46₁ bis 46ₙ zu entsprechenden Spannungssignalverläufen Us1 bis Usn führen, die den Stromsignalverläufen und damit den Laststromverläufen entsprechen, und damit Antwortsignale im Sinne der Erfindung darstellen.

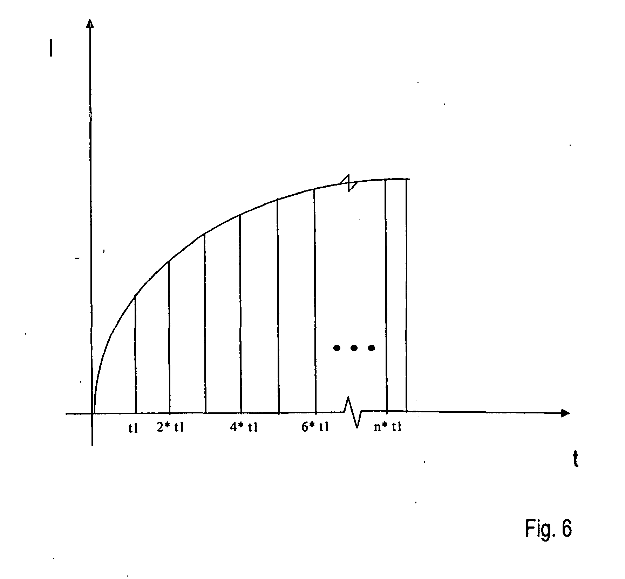

Diese Antwortsignale werden unter Analog-Digital-Wandlung in der Erfassungseinrichtung 54 erfasst und zwischengespeichert. Dabei werden, wie in Fig. 6 schematisch gezeigt, jeweils Spannungswerte in gleichen Zeitintervallen t1 beginnend mit dem Zeitpunkt, zu dem die Spannung an den Ausgängen 26₁ bis 26ₙ jeweils auf den durch die Versorgungsspannungsquelle 18 gegebenen Wert springt, erfasst und zwischengespeichert.

Die erfassten Signalverläufe geben, wie bereits zuvor erwähnt, elektrische Eigenschaften der Lasten 16₁₁ bis 16₁ₙ wieder, so dass anhand der Verläufe der Antwortsignale verschiedenen Typen der Lasten ermittelt werden können.

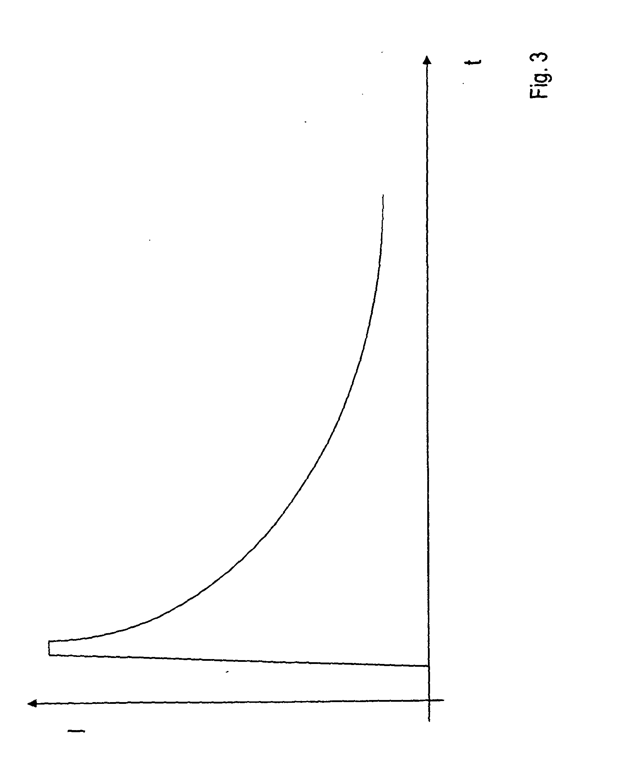

In den Fig. 3 bis 5 sind beispielhaft Antworten, d.h. Verläufe von Lastströmen I als Funktion der Zeit t für verschiedene idealisierte elektrische Einrichtungen gezeigt, deren Eigenschaften auf einen Sprung in der Spannung durch entsprechende Kennlinien für eine im Wesentlichen kapazitive Last, einen konstanten ohmschen Widerstand und eine induktive Last, beispielsweise eine Spule gegeben sind. Die Antwortsignale an den Analogeingängen 46₁ bis 46ₙ sind im Wesentlichen proportional zu diesen Verläufen.

Fig. 3 zeigt den typischen Verlauf für eine Reihenschaltung aus einem Widerstand und einem Kondensator bzw. einer Kapazität, wobei der Kennlinienverlauf durch die Größe des Widerstands bzw. die Größe der Kapazität bestimmt ist.

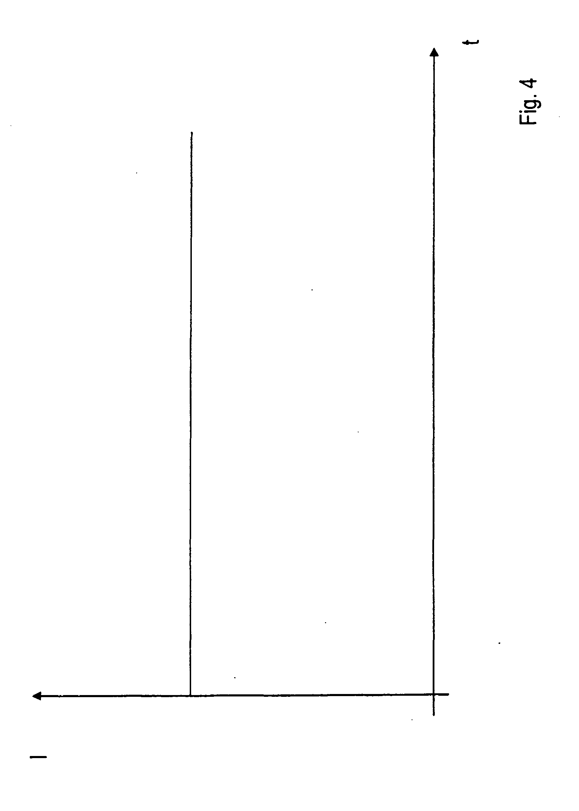

Fig. 4 zeigt die Antwort einer Last mit einem ohmschen Widerstand, bei der ohne einen Einschwingvorgang praktisch sofort ein stationärer, der Größe des Widerstands entsprechender Stromwert erreicht wird.

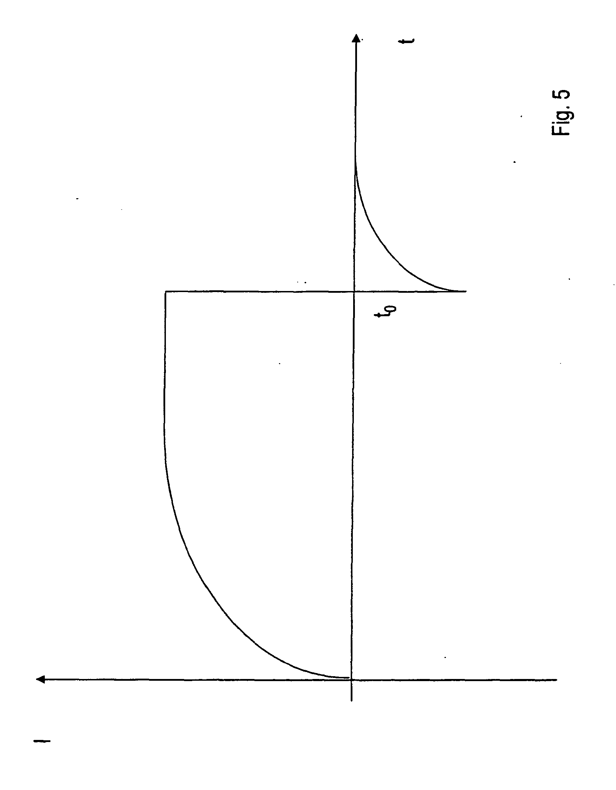

Fig. 5 schließlich zeigt die Antwort einer induktiven Last, beispielsweise eines Motors, beim Einschalten und späteren Ausschalten zum Zeitpunkt to. Auch hier wird der Verlauf in an sich bekannter Weise durch den Widerstand und die Induktivität der Last bestimmt.

Ein weiterer besonderer Typ von Last wird durch Glühbirnen dargestellt, bei denen zunächst ein sehr großer Strom auftritt, da der Glühfaden im kalten Zustand eine relative hohe Leitfähigkeit aufweist. Der Strom fällt dann jedoch sehr schnell wieder auf einen niedrigeren Wert ab, da sich der Glühfaden aufheizt und damit einen höheren Widerstand erhält. Danach wird ein konstanter Strom ähnlich wie bei einem ohmschen Widerstand erreicht. Auf diese Weise können anhand des Verlaufs und des asymptotischen Wertes des Stroms nicht nur Glühbirnen erkannt, sondern auch deren Parameter, beispielsweise die Leistungsaufnahme, ermittelt werden.

Neben einer Grobeinteilung in kapazitive, induktive und ohmsche Lasten und beispielsweise Glühbirnen können auch entsprechende Werte der typischen Parameter, beispielsweise der Kapazität, der Induktivität und des Widerstands zur Einteilung in verschiedene Typen verwendet werden.

Ausgehend von möglichen, mit den Treibermodulen 14₁ bis 14ₙ zu betreibenden Lasten werden vor der eigentlichen Typerkennung Referenzdaten ermittelt, die den Kennlinienverlauf bzw. den Verlauf der Antwortsignale der Lasten wiedergeben und so eine Einteilung in Typen der Lasten erlauben.

Die Referenzdaten sind in Verbindung mit den entsprechenden Typen tabellenartig in der ersten Speichereinrichtung 48 abgelegt.

Im vorliegenden Beispiel werden als Referenzdaten nicht die Signalverläufe der entsprechenden Referenzeinrichtungen selbst verwendet. Vielmehr werden basierend auf in konstanten Zeitabständen erfassten Werten von Analogsignalen für die vorgegebenen, die Typen definierenden Referenzeinrichtungen Referenzwerte von Parametern von vorgegebenen Ausgleichsfunktionen ermittelt, die den Verlauf der Analogsignale für die Referenzeinrichtung näherungsweise wiedergeben. Beispielsweise können als Ausgleichsfunktionen Splines verwendet werden. Es werden dann nur die entsprechenden Koeffizienten ermittelt und als Referenzdaten für die Typen abgespeichert.

Der Vergleich der für die Lasten 16₁₁ bis 16₁ₙ erfassten Antwortsignale erfolgt nun derart, dass ausgehend von den in konstanten Zeitabständen erfassten Antwortsignalwerten die vorgegebene Ausgleichsfunktion durch diese Werte gelegt wird, deren funktionale Form der funktionalen Form der bei der Ermittlung der Referenzdaten verwendeten Ausgleichsfunktion entspricht. Dabei werden Werte der Parameter bzw. Koeffizienten der Ausgleichsfunktion so ermittelt, dass diese die erfassten Antwortsignale möglichst gut wiedergeben.

Für eine gegebene Treiberschaltung 24ⱼ bzw. eine gegebene Last 16₁ⱼ (j = 1, ..., n) wird der erhaltene Satz von Parameter- bzw. Koeffizientenwerten mit den entsprechenden Referenzwerten in der ersten Speichereinrichtung 48 verglichen. Bei einer hinreichenden Übereinstimmung, die beispielsweise festgestellt werden kann, wenn die Beträge der Abweichungen der sich entsprechenden Parameter bzw. Koeffizienten voneinander jeweils unterhalb eines vorgegebenen Grenzwertes bleiben, wird ein entsprechender Typ für die Last ermittelt.

Die Typen der Lasten 16₁₁ bis 16₁ₙ werden in der Reihenfolge der Ausgänge 26₁₁ bis 26ₙ₁ geordnet in der zweiten Speichereinrichtung 50 abgespeichert und bilden daher ein ermitteltes Anschlussmuster im Sinne der vorliegenden Erfindung.

Die Konfigurationseinrichtung 52 ist so ausgebildet, dass das Anschlussmuster über die Busschnittstelle 28 und den Bus 12 von der zentralen Steuereinheit 10 auslesbar ist.

Basierend auf diesen Treibermodulen und deren Anschlussmustererkennung läuft ein Verfahren zur Einbindung eines Treibermoduls in eine Kraftfahrzeugelektrik nach einer bevorzugten Ausführungsform der Erfindung folgendermaßen ab:

Nach Zusammenstecken der verschiedenen Komponenten der Kraftfahrzeugelektrik werden bei einer ersten Inbetriebnahme gemäß den oben geschilderten Verfahren von den Treibermodulen 14₁ bis 14ₘ die Typen der an diese über die jeweiligen Ausgänge 26₁₁ bis 26ₘₙ angeschlossenen Lasten 16₁₁ bis 16ₘₙ ermittelt und abgespeichert.

Die zentrale Steuereinheit 10 fragt nun über den Bus 12 die ermittelten Anschlussmuster ab.

In dem Speicher 20 der zentralen Steuereinheit 10 sind alle bei einer Verwendung der zentralen Steuereinheit 10 in Kraftfahrzeugelektriken möglichen Anschlussmuster von elektrischen Verbrauchern bzw. Lasten an Treibermodulen in Verbindung mit Treiberparametern und Kennungen für die für die entsprechenden elektrischen Einrichtungen zu verwendenden Signalkanäle abgelegt.

Es werden nun die ermittelten Anschlussmuster mit den gespeicherten vorgegebenen Anschlussmustern verglichen.

Wird eine Übereinstimmung festgestellt, ist das entsprechende Treibermodul einschließlich der an dieses angeschlossenen elektrischen Einrichtungen bzw. Lasten in seiner Funktion identifiziert und es werden an dieses die zu verwendenden Parameter für die Treiber, beispielsweise maximal zulässige Ströme oder Diagnoseparameter, übertragen und dort gesetzt. Weiterhin werden vorgegebene Signalkanäle für elektrische Einrichtungen den jeweiligen konkreten elektrischen Einrichtungen bzw. Lasten zugeordnet, so dass beispielsweise ein einem Blinker links entsprechender Signalkanal auch tatsächlich zum Schalten einer Blinkerlampe an einem entsprechenden Treibermodul führt.

In Fig. 1 sind beispielhaft für die Treibermodule 14₁ und 14ₘ zwei Anschlussmuster teilweise gezeigt.

Bei dem Anschlussmuster des Treibermoduls 14₁ treten eine Glühlampe 16₁ₙ mit beispielsweise 21 W Leistungsaufnahme und mehrere ohmsche Lasten 16₁₁ bis 16₁ₙ₋₁ als Typen elektrischer Einrichtungen auf.

An dem Treibermodul 14ₘ dagegen weist das Anschlussmuster beginnend mit einem ohmschen Widerstand 16ₘ₁ neben weiteren Einrichtungen einen Motor 16ₘₙ₋₁ als induktive Last sowie eine Glühbirne 16ₘₙ mit im Beispiel 21 Watt Leistungsaufnahme als Typen elektrischer Einrichtungen auf.

Beide ermittelten Muster sind voneinander verschieden und können zur eindeutigen Identifizierung der Trägermodule 14₁ und 14ₘ und der daran angeschlossenen elektrischen Einrichtungen bzw. Verbraucher verwendet werden. Dadurch, dass das Anschlussmuster die Typen in der Reihenfolge der jeweiligen Ausgänge der Treibermodule umfasst, ist auch eine eindeutige Zuordnung von Lasten gleichen Typs mit verschiedenen Funktionen möglich.

### Bezugszeichenliste

- 10: zentrale Steuereinheit
- 12: Bus
- 14₁ bis 14ₘ: Treibermodule
- 16₁₁ bis 16ₘₙ: Lasten
- 18: Spannungsquelle
- 20: Speicher
- 22: Steuer- und Auswerteeinrichtung
- 24₁ bis 24ₙ: Treiberschaltungen
- 26₁ bis 26ₙ: Ausgänge
- 28: Schnittstelle
- 30₁₁ bis 30ₘₙ: Signalkanäle
- 32: MOSFET-Bauelement
- 34: Source-Anschluss
- 36: Drain-Anschluss
- 38: Gate-Anschluss
- 40: Stromsignalausgang
- 42: Stromsignalzweig
- 44₁ bis 44ₙ: Schaltsignalausgang
- 46₁ bis 46ₙ: Analogeingänge
- 48: erste Speichereinrichtung
- 50: zweite Speichereinrichtung
- 52: Konfigurationseinrichtung
- 54: Erfassungseinrichtung

## Patentansprüche

1. Verfahren zum Einbinden wenigstens eines Treibermoduls (14₁, ..., 14ₘ) in eine Kraftfahrzeugelektrik, die wenigstens das wenigstens eine Treibermodul (14₁, ..., 14ₘ), an Aus- und/oder Eingänge (26₁₁, ..., 26ₘₙ) des Treibermoduls (14₁, ..., 14ₘ) angeschlossene elektrische Einrichtungen (16₁₁, ..., 16ₘₙ) vorgegebener möglicher Typen sowie eine mit dem wenigstens einen Treibermodul (14₁, ..., 14ₘ) über Signalkanäle (30₁₁, ..., 30ₘₙ) verbundene Steuereinheit (10) umfasst,
**dadurch gekennzeichnet, dass** die Steuereinheit (10) zum Betrieb der elektrischen Einrichtungen (16₁₁, ..., 16ₘₙ) über diesen zugeordnete Signalkanäle (30₁₁, ..., 30ₘₙ) Signale zu und/oder von dem wenigstens einen Treibermodul (14₁, ..., 14ₘ) übermittelt bzw. empfängt, bei dem
ein Anschlussmuster des wenigstens einen Treibermoduls (14₁, ..., 14ₘ) ermittelt wird, das wenigstens durch die Typen der an das wenigstens eine Treibermodul (14₁, ..., 14ₘ) angeschlossenen elektrischen Einrichtungen (16₁₁, ..., 16ₘₙ) und deren jeweilige Anzahl gegeben ist,
das ermittelte Anschlussmuster mit vorgegebenen Anschlussmustern für in der Kraftfahrzeugelektrik möglicherweise vorkommende Treibermodule (14₁, ..., 14ₘ) mit daran angeschlossenen elektrischen Einrichtungen (16₁₁, ..., 16ₘₙ) verglichen wird, denen jeweils wenigstens ein Parameter zum Betrieb des wenigstens einen Treibermoduls (14₁, ..., 14ₘ) und/oder der daran angeschlossenen elektrischen Einrichtungen (16₁₁, ..., 16ₘₙ) zugeordnet ist, und auf der Basis des Vergleichs dem wenigstens einen Treibermodul (14₁, ..., 14ₘ) wenigstens ein Parameter zugewiesen wird und/oder Signalkanäle (30₁₁, ..., 30ₙₘ) und an das wenigstens eine Treibermodul (14₁, ..., 14ₘ) angeschlossene elektrische Einrichtungen (16₁₁, ..., 16ₘₙ) einander zugeordnet werden.

2. Verfahren nach Anspruch 1,
**dadurch gekennzeichnet,**
**dass** das Anschlussmuster zusätzlich Angaben darüber enthält, welcher ermittelte Typ von elektrischer Einrichtung (16₁₁, ..., 16ₘₙ) an welchen Aus- und/oder Eingang (26₁₁, ..., 26ₘₙ) des wenigstens einen Treibermoduls (14₁, ..., 14ₘ) angeschlossen ist.

3. Verfahren nach Anspruch 1,
**dadurch gekennzeichnet,**
**dass** auf der Basis der Parameter, die dem durch den Vergleich ermittelten Anschlussmuster zugeordnet sind, vorgegebene Signalkanäle (30₁₁, ..., 30ₙₘ) den elektrischen Einrichtungen (16₁₁, ..., 16ₘₙ) zugeordnet werden.

4. Verfahren nach einem der vorhergehenden Ansprüche,
**dadurch gekennzeichnet,**
**dass** mehrere gleiche mit der Steuereinheit (10) verbundene Treibermodule (14₁, ..., 14ₘ) zum Betrieb wenigstens einiger der elektrischen Einrichtungen (16₁₁, ..., 16ₘₙ) konfigurierbar sind und entsprechend den an sie angeschlossenen elektrischen Einrichtungen (16₁₁, ..., 16ₘₙ) automatisch konfiguriert werden.

5. Verfahren nach einem der vorhergehenden Ansprüche,
**dadurch gekennzeichnet,**
**dass** zur Ermittlung des Anschlussmusters die Typen der an das wenigstens eine Treibermodul (14₁, ..., 14ₘ) angeschlossenen elektrischen Einrichtungen ermittelt werden, indem an die Ein- bzw. Ausgänge (26₁₁, ..., 26ₘₙ) vorgegebene elektrische Testsignale angelegt werden,
Antwortsignale erfasst werden, die die Antworten der elektrischen Einrichtungen (16₁₁, ..., 16ₘₙ) auf die jeweiligen Testsignale wiedergeben, und
zur Ermittlung von vorgegebenen Typen der angeschlossenen elektrischen Einrichtungen (16₁₁, ..., 16ₘₙ) aus den Antwortsignalen ermittelte Daten mit entsprechenden vorgegebenen Referenzdaten für mögliche vorgegebene Typen von elektrischen Einrichtungen (16₁₁, ..., 16ₘₙ), für die das wenigstens eine Treibermodul (14₁, ..., 14ₘ) vorgesehen ist, verglichen werden.

6. Verfahren nach Anspruch 5,
**dadurch gekennzeichnet,**
**dass** als Antwortsignal jeweils ein Stromsignal und/oder ein Spannungssignal verwendet wird, das den Strom zu bzw. die Spannung an der jeweiligen elektrischen Einrichtung (16₁₁, ..., 16ₘₙ) wiedergibt.

7. Verfahren nach Anspruch 6,
**dadurch gekennzeichnet,**
**dass** wenigstens ein Treiber (24₁, ..., 24ₙ) des wenigstens einen Treibermoduls (14₁, ..., 14ₘ) als Lastschalter ein MOSFET-Bauelement (32) mit Strommessung aufweist, das ein dem Laststrom entsprechendes Stromsignal abgibt, und
**dass** als Antwortsignal ein durch das Stromsignal an einem Widerstandselement (R) erzeugtes Spannungssignal verwendet wird.

8. Verfahren nach einem der Ansprüche 5 bis 7,
**dadurch gekennzeichnet,**
**dass** ein zeitlicher Verlauf wenigstens eines Antwortsignals nach einem durch das jeweilige Testsignal vorgegebenen Anfangszeitpunkt erfasst wird, und
**dass** auf der Basis wenigstens des zeitlichen Verlaufs der Typ der jeweiligen elektrischen Einrichtungen (16₁₁, ..., 16ₘₙ) ermittelt wird.

9. Verfahren nach einem der Ansprüche 5 bis 8,
**dadurch gekennzeichnet,**
**dass** als Testsignale Sprungsignale verwendet werden.

10. Verfahren nach Anspruch 9,
**dadurch gekennzeichnet,**
**dass** die Testsignale durch Ein- oder Ausschalten einer entsprechenden elektrischen Einrichtung (16₁₁, ..., 16ₘₙ) erzeugt werden.

## Claims

1. Method for incorporating at least one driver module (14ᵢ, ..., 14ₘ) into an electrical system of motor vehicles which comprises at least the at least one driver module (14ᵢ, ..., 14ₘ), electrical devices (16₁₁, ..., 16ₘₙ) of predetermined possible types connected to outputs and/or inputs (26₁₁, ..., 26ₘₙ) of the driver module (14ᵢ, ..., 14ₘ) and a control unit (10) connected to the at least one driver module (14ᵢ, ..., 14ₘ) via signal channels (30₁₁, ..., 30ₘₙ),
**characterized in that**
the control unit (10) transmits signals to and/or receives signals from the at least one driver module (14ᵢ, ..., 14ₘ) for operating the electrical devices (16₁₁, ..., 16ₘₙ) via signal channels (30₁₁, ..., 30ₘₙ) associated with the latter,
wherein
a connection pattern of the at least one driver module (14ᵢ, ..., 14ₘ) is established which is given at least by the types of the electrical devices (16₁₁, ..., 16ₘₙ) connected to the at least one driver module (14ᵢ, ..., 14ₘ) and by the respective number thereof,
the established connection pattern is compared to predetermined connection patterns for driver modules (14ᵢ, ..., 14ₘ) with electrical devices (16₁₁, ..., 16ₘₙ) connected thereto which may possibly occur in the electrical system of motor vehicles, with at least one parameter for operating the at least one driver module (14ᵢ, ..., 14ₘ) and/or the electrical devices (16₁₁, ..., 16ₘₙ) connected thereto being respectively associated with the electrical devices, and,
on the basis of the comparison, at least one parameter is assigned to the at least one driver module (14ᵢ, ..., 14ₘ) and/or signal channels (30₁₁, ..., 30ₘₙ) and electrical devices (16₁₁, ..., 16ₘₙ) connected to the at least one driver module (14ᵢ, ..., 14ₘ) are associated with one another.

2. Method in accordance with claim 1, **characterized in that** the connection pattern additionally contains data on which determined type of electrical device (16₁₁, ..., 16ₘₙ) is connected to which output and/or input (26₁₁, ..., 26ₘₙ) of the at least one driver module (14ᵢ, ..., 14ₘ).

3. Method in accordance with claim 1, **characterized in that** predetermined signal channels (30₁₁, ..., 30ₘₙ) are associated with the electrical devices (16₁₁, ..., 16ₘₙ) on the basis of the parameters which are associated with the connection pattern which is established by the comparison.

4. Method in accordance with at least one of the preceding claims, **characterized in that** a plurality of like driver modules (14ᵢ, ..., 14ₘ) connected to the control unit (10) can be configured for operating at least some of the electrical devices (16₁₁, ..., 16ₘₙ) and are automatically configured in accordance with the electrical devices (16₁₁, ..., 16ₘₙ) connected to them.

5. Method in accordance with any one of the preceding claims, **characterized in that** the types of the electrical devices connected to the at least one driver module (14ᵢ, ..., 14ₘ) are established for the determination of the connection pattern **in that** predetermined electrical test signals are applied to the inputs and/or outputs (26₁₁, ..., 26ₘₙ),
response signals are sensed which reproduce the responses of the electrical devices (16₁₁, ..., 16ₘₙ) to the respective test signals; and, for the determination of predetermined types of the connected electrical devices (16₁₁, ..., 16ₘₙ), data determined from the response signals are compared with corresponding predetermined reference data for possible predetermined types of electrical devices (16₁₁, ..., 16ₘₙ) for which the at least one driver module (14ᵢ, ..., 14ₘ) is provided.

6. Method in accordance with claim 5, **characterized in that**, in each case, a current signal and/or a voltage signal is used as the response signal which reproduces the current to and/or the voltage at the respective electrical device (16₁₁, ..., 16ₘₙ).

7. Method in accordance with claim 6, **characterized in that** at least one driver (24ᵢ, ..., 24ₙ) of the at least one driver module (14ᵢ, ..., 14ₘ) has a MOSFET component (32) with current measurement as a load switch which transmits a current signal in accordance with the load current; and **in that**
a voltage signal generated by the current signal at a resistance element (R) is used as the response signal.

8. Method in accordance with any one of the claims 5 to 7, **characterized in that** a time dependent course of at least one response signal is sensed after an initial time point predetermined by the respective test signal; and **in that**
the type of the respective electrical devices (16₁₁, ..., 16ₘₙ) is established on the basis at least of the time dependent course.

9. Method in accordance with any one of the claims 5 to 8, **characterized in that** discontinuous or step function signals are used as test signals.

10. Method in accordance with claim 9, **characterized in that** the test signals are generated by switching a corresponding electrical device (16₁₁, ..., 16ₘₙ) on or off.

## Revendications

1. Procédé pour implanter au moins un module formant étage d'attaque (14₁, ..., 14ₘ) dans un système électrique d'un véhicule automobile, qui comprend au moins le au moins un module formant étage d'attaque (14₁, ..., 14ₘ), des dispositifs électriques (16₁₁, ..., 16ₘₙ) de types possibles prédéterminés, raccordés à des entrées et/ou à des sorties (26₁₁, ..., 26ₘₙ) du module formant étage d'attaque (14₁, ..., 14ₘ), ainsi qu'une unité de commande (10) reliée au au moins un module formant étage d'attaque (14₁, ..., 14ₘ) par l'intermédiaire de canaux de transmission de signaux (30₁₁, ..., 30ₘₙ), **caractérisé en ce que**
pour le fonctionnement des dispositifs électriques (16₁₁, ..., 16ₘₙ), l'unité de commande (10) émet ou reçoit, par l'intermédiaire des canaux de transmission de signaux de signaux (30₁₁, ..., 30ₘₙ) associés à ces dispositifs, des signaux en direction et/ou en provenance d'au moins un module formant étage d'attaque (14₁, ..., 14ₘ),
dans lequel
un modèle de raccordement du au moins un module formant étage d'attaque (14₁, ..., 14ₘ) est déterminé, modèle qui est défini au moins par les types des dispositifs électriques (16₁₁, ..., 16ₘₙ) raccordés au au moins un module formant étage d'attaque (14₁, ..., 14ₘ), et par leur nombre respectif,
le modèle de raccordement déterminé est comparé à des modèles de raccordement prédéterminés pour des modules formant étages d'attaque (14₁, ..., 14ₘ) qui sont utilisés éventuellement dans le système électrique du véhicule automobile et auxquels sont raccordés des dispositifs électriques (16₁₁, ..., 16ₘₙ), auxquels est associé respectivement au moins un paramètre pour faire fonctionner le au moins un module formant étage d'attaque (14₁, ..., 14ₘ) et/ou desdits dispositifs électriques (16₁₁, ..., 16ₘₙ) qui y sont raccordés, et sur la base de la comparaison, au moins un paramètre est affecté au au moins un module formant étage d'attaque (14₁, ..., 14ₘ), et/ou des dispositifs électriques (16₁₁, ..., 16ₘₙ) raccordés au au moins un module formant étage d'attaque (14₁, ..., 14ₘ) sont associés entre eux.

2. Procédé selon la revendication 1, **caractérisé en ce que** le modèle de raccordement contient en outre des indications sur quel type déterminé de dispositif électrique (16₁₁, ..., 16ₘₙ) est raccordé à quelle sortie et/ou entrée (26₁₁, ..., 26ₘₙ) du au moins un module formant étage d'attaque (14₁, ..., 14ₘ).

3. Procédé selon la revendication 1, **caractérisé en ce que** sur la base des paramètres des canaux prédéterminés de transmission de signaux (30₁₁, ..., 30ₘₙ) sont associés aux dispositifs électriques (16₁₁, ..., 16ₘₙ) sur la base des paramètres qui sont associés au modèle de raccordement déterminé par la comparaison.

4. Procédé selon l'une des revendications précédentes, **caractérisé en ce que** plusieurs modules formant étages d'attaque identiques (14₁, ..., 14ₘ) reliés à l'unité de commande (10) peuvent être configurés pour faire fonctionner au moins quelques-uns des dispositifs électriques (16₁₁, ..., 16ₘₙ) et sont configurés automatiquement d'une manière correspondant aux dispositifs électriques (16₁₁, ..., 16ₘₙ) qui leur sont raccordés.

5. Procédé selon l'une des revendications précédentes, **caractérisé en ce**
**que** pour la détermination du modèle de raccordement, on détermine les types des dispositifs électriques raccordés au au moins un module formant étage d'attaque (14₁, ..., 14ₘ) par le fait que des signaux électriques prédéterminés de test sont appliqués aux entrées ou aux sorties (26₁₁, ..., 26ₘₙ),
**qu'**on détecte des signaux de réponse, signaux qui reproduisent des réponses des dispositifs électriques (16₁₁, ..., 16ₘₙ) dans les signaux de test respectifs, et que pour la détermination de types prédéterminés des dispositifs électriques raccordés (16₁₁, ..., 16ₘₙ), des données déterminées à partir des signaux de réponse sont comparées à des données de référence prédéterminées correspondantes pour des types prédéterminés possibles de dispositifs électriques (16₁₁, ..., 16ₘₙ), pour lesquels est prévu le au moins un module formant étage d'attaque (14₁, ..., 14ₘ).

6. Procédé selon la revendication 5, **caractérisé en ce qu'**on utilise comme signal de réponse respectivement un signal de courant et/ou un signal de tension, qui reproduit le courant ou la tension appliqué au dispositif électrique respectif (16₁₁, ..., 16ₘₙ).

7. Procédé selon la revendication 6, **caractérisé en ce**
**qu'**au moins un étage d'attaque (24₁, ..., 24ₙ) du au moins un module formant étage d'attaque (14₁, ..., 14ₘ) comporte comme interrupteur de charge un composant MOSFET (32) avec mesure de courant, qui délivre un signal de courant correspondant au courant de charge, et
**qu'**on utilise comme signal de réponse un signal de tension produit par le signal de courant dans un élément de résistance (R).

8. Procédé selon l'une des revendications 5 à 7, **caractérisé en ce**
**qu'**une allure dans le temps d'au moins un signal de réponse est détectée après un instant initial prédéterminé par le signal de test respectif, et
**que** le type des dispositifs électriques respectifs (16₁₁, ..., 16ₘₙ) est déterminé sur la base au moins de l'allure dans le temps.

9. Procédé selon l'une des revendications 5 à 8, **caractérisé en ce qu'**on utilise des signaux de saut comme signaux de test.

10. Procédé selon la revendication 9, **caractérisé en ce que** les signaux de test sont produits par le branchement ou le débranchement d'un dispositif électrique correspondant (16₁₁, ..., 16ₘₙ).
